# EUROPEAN PATENT APPLICATION

(11) **EP 2 278 610 A1**
(43) Date of publication of application: **26.01.2011**
(21) Application number: 09738710.4
(22) Date of filing: 15.04.2009
(51) Int. Cl.: H01J 61/073, G03B 21/14

(54) **ELECTRODE FOR ULTRA-HIGH PRESSURE MERCURY LAMP AND ULTRA-HIGH PRESSURE MERCURY LAMP**

(30) Priority: 30.04.2008 JP 2008118074
(71) Applicant: Iwasaki Electric Co., Ltd, Tokyo 105-0014 (JP)
(72) Inventor: NISHIMURA, Junpei, Gyoda-shi Saitama 361-8505 (JP); YOSHIZAWA, Toshio, Gyoda-shi Saitama 361-8505 (JP)
(74) Representative: Leinweber & Zimmermann
(86) International application number: PCT/JP2009/057571
(87) International publication number: WO 2009/133773

(57) **Abstract**

Disclosed is a tungsten electrode for ultra-high pressure mercury lamps comprising an electrode rod, a first coil wound around the front end side of the electrode, and a second coil wound around the electrode rod starting from the end of the first coil. The tungsten wire of the first coil is smaller in diameter than the tungsten wire of the second coil.

## Description

### TECHNICAL FIELD

The present invention relates to an electrode for an ultra-high pressure mercury lamp, an ultra-high pressure mercury lamp using the same, and a manufacturing method of an electrode for an ultra-high pressure mercury lamp.

### BACKGROUND ART

In recent years, light source apparatuses each including an ultra-high pressure mercury lamp, generally referred to as a short-arc discharge lamp, combined with a reflector have been widely used as light sources for projector devices, projectors, and so forth.
Generally, since projector devices are demanded to provide sufficient brightness on screens, the projector devices need light sources that are almost equivalent to point light sources. Therefore, short-arc discharge lamps are mainly used. Employing short-arc lamps, however, causes a decrease in lamp voltage, an increase in lamp current, and other unfavorable consequences, wearing electrodes thereof significantly.

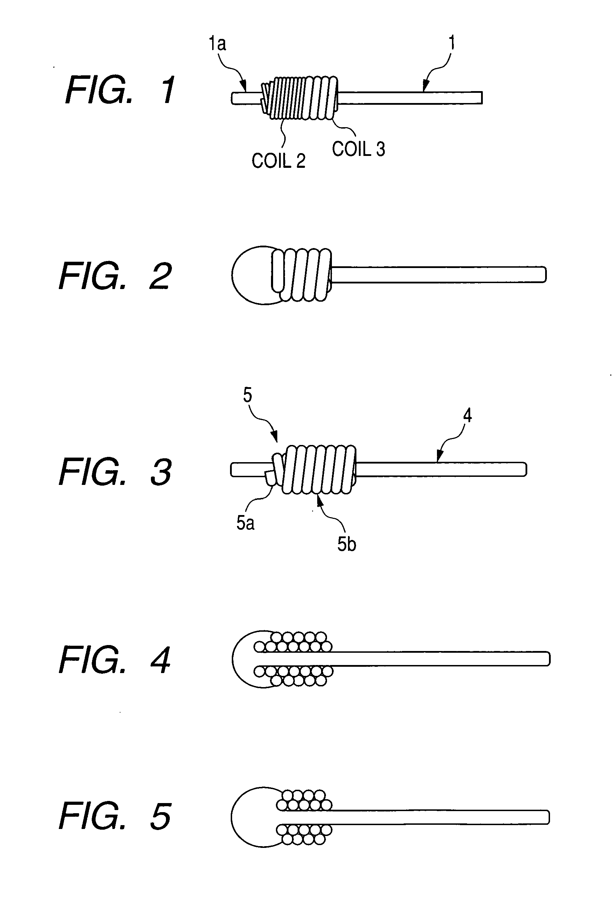

Fig. 3 shows an example of a conventional electrode. As shown in the drawing, an electrode typically includes an electrode rod 4 made of tungsten and a coil 5 made of tungsten. Since the coil is wound around the electrode rod, the electrode rod and the coil are restricted relative to each other to certain degrees in terms of thickness. Thus, a very thick coil cannot be wound around the electrode rod. Therefore, generally, a coil 5a is single-wound around a distal-end portion of the electrode rod 4, the second winding is started at a portion of a coil 5b to form an electrode base, and the distal end of the electrode base is then heat-molten to form an electrode. In this respect, there is an example where the shape of a molten portion of an electrode distal end is controlled by changing the wire diameter, i.e., thickness, of coil wound around an electrode rod (for example, Patent Document 1).

### CITATION LIST

### PATENT LITERATURE

Patent Literature 1: Japanese Patent Application Publication No. 2007-273174

### SUMMARY OF INVENTION

### TECHNICAL PROBLEMS

Consider the case where an electrode is formed by winding coils of the same wire diameter around an electrode rod and by heat-melting a distal end portion of the electrode in the manner as shown in Fig. 3. In this case, an insufficiently-molten electrode coil portion may exist in the molten dome at the electrode distal end when the cross section of the electrode is observed as shown in Fig. 4. When the electrode distal end wears as the lamp driving time elapses, the non-molten electrode coil portion in the dome is exposed from the electrode distal end, making the discharge condition unstable during the driving of the lamp.

Furthermore, the temperature of the electrode in the molten dome shows non-uniform distribution because of the insufficiently-molten electrode coil portion existing in the molten dome at the electrode distal end. Accordingly, the discharge is made unstable.
Thus, the electrode is desirably in a state that the electrode coil portion in the molten dome at the electrode distal end is sufficiently molten as shown in the cross section in Fig. 5.

An object of the present invention is to provide uniform brightness without flickering of a lamp while stable arc discharge is maintained during the driving of the lamp.

### SOLUTION TO PROBLEMS

A first aspect of the present invention is a tungsten electrode for an ultra-high pressure mercury lamp. The tungsten electrode includes: an electrode rod; a first coil wound around a distal-end portion of the electrode rod; and a second coil wound from a winding end of the first coil. A wire diameter of a tungsten wire forming the first coil is smaller than a wire diameter of a tungsten wire forming the second coil.
Here, the distal-end portion of the electrode rod and the first coil are melt-processed to form an electrode distal end.
Moreover, it is preferable that the first coil be wound to form multiple layers.

A second aspect of the present invention is an ultra-high pressure mercury lamp including the tungsten electrodes of the first aspect disposed to face each other in a bulb.

A third aspect of the present invention is a manufacturing method of a tungsten electrode for an ultra-high pressure mercury lamp. The manufacturing method includes the steps of: winding a first coil around an electrode rod; winding a second coil from a winding end of the first coil; and melt-processing a distal-end portion of the electrode rod and the first coil to form an electrode distal end. A wire diameter of a tungsten wire forming the first coil is smaller than a wire diameter of a tungsten wire forming the second coil.
Here, in the step of winding the first coil around the electrode rod, it is preferable that the first coil be wound to form multiple layers.

### BRIEF DESCRIPTION OF DRAWINGS

[Fig. 1] Fig. 1 is a plan view showing an example of an electrode used in an embodiment of the present invention.
[Fig. 2] Fig. 2 is a plan view showing an example where a distal end of the electrode used in the embodiment of the present invention is melt-processed.
[Fig. 3] Fig. 3 is a plan view showing an example of a conventional electrode.
[Fig.4] Fig. 4 is a sectional view showing an example where a distal end of the conventional electrode is melt-processed.
[Fig. 5] Fig. 5 is a sectional view showing an example where the distal end of the electrode used in the embodiment of the present invention is melt-processed.
[Fig. 6] Fig. 6 is a plan view showing an example of an electrode used in another embodiment of the present invention.
[Fig. 7] Fig. 7 is a plan view showing an example of an electrode used in still another embodiment of the present invention.
[Fig. 8] Fig. 8 is a sectional view of an ultra-high pressure mercury lamp in which a bulb including the electrodes of the present invention is incorporated in a reflector.

### DESCRIPTION OF EMBODIMENT

An electrode for an ultra-high pressure mercury lamp and a lamp using the same are characterized as follows. The electrode for an ultra-high pressure mercury lamp includes, as coils: a tungsten wire with a small wire diameter, the tungsten wire wound around a portion of an electrode rod on an electrode distal-end side thereof which is melt-processed; and a tungsten wire continuously wound from a winding end of the coil, the tungsten wire having a larger wire diameter than the wire diameter of the tungsten wire wound around a portion of the electrode rod on the distal-end side thereof. A portion of the coil made of the tungsten wire having a smaller wire diameter is mainly melt-processed.
Hereinbelow, an embodiment of the present invention will be described based on an example using the drawings.

### Example 1

Fig. 1 is a view showing an example of an electrode used in an ultra-high pressure mercury lamp according to the present invention before a distal end of the electrode is molten, that is, electrode base. Fig. 2 is a view showing an example of a state where the electrode of Fig. 1 is melt-processed.

In the electrode of Fig. 1, a thin coil 2 made of a tungsten wire is single-, double-, or triple-wound, as a coil layer, around an electrode-distal-end portion of an electrode rod 1; a coil 3 made of a tungsten wire having a wire diameter somewhat larger than that of the coil 2 is double-wound continuously from the thin coil. Note that, in Fig. 1, the coils with the respective wire diameters are single-, double-, or triple-wound; however, appropriate electrode designs can be made on the number of coil-turns in a winding and the number of coils overlapped, depending on the lamp power, and the like. Herein, the number of coil-turns refers to the number of times the tungsten wire is wound around the electrode rod. The number of overlapped layers of a coil, that is, the number of layers formed by winding the coil, is called a single- or double-wound.

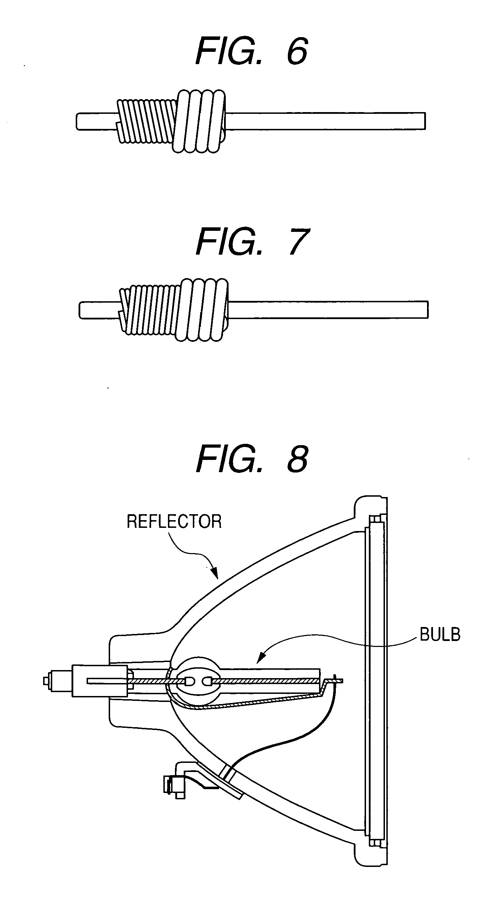

Fig. 6 shows an example where the thin coil is single-wound on the electrode-distal-end side, and the thick coil is double-wound continuously to the thin coil. Moreover, Fig. 7 shows a view where both of the thin coil and the thick coil are double-wound. As shown in Figs. 6 and 7, the size of a molten portion at the time of melt-processing the electrode distal end can be adjusted by altering the number of the coil layer of a thin coil to be wound around an electrode-distal-end portion of the electrode rod, or by altering the number of turns (unillustrated).

A molten dome is formed at an electrode distal end portion by melt-processing a distal end portion 1a of the electrode rod 1 and the coil 2 of the electrode shown in Fig. 1 through arc discharge or laser radiation. Fig. 2 shows an external appearance of such a state. In this case, it is preferable that a portion of the distal-end portion of the coil 3 is molten.

Then, an experiment was conducted using a 150W bulb formed of the ultra-high pressure mercury lamp of the present invention including a pair of electrodes having the shape shown in Fig. 2 in a discharge container. Here, the discharge container was filled with, for example, 0.1 to 0.3 mg/mm³ of mercury, a halogen, and a rare gas, and the distance between the pair of electrodes was selected to be 2.0 mm or shorter.

A lifetime test was conducted on six sets of light source apparatuses in each of which the bulb including the electrodes of the present invention was incorporated in a reflector, and on six sets of light source apparatuses in each of which a bulb including conventional electrodes, that is, the electrodes with the electrode distal ends melt-processed as shown in Fig. 3, was incorporated in a reflector. The light source apparatuses using the electrodes of the present invention showed results superior to those using the conventional electrodes in terms of flickering, change in brightness, and lamp lifetime.
Additionally, Fig. 8 shows a state where the bulb including the electrodes of the present invention is incorporated in the reflector and an external auxiliary conductor for start-up is provided to the bulb.

Since a lamp having a configuration as described above uses a thin tungsten wire as a coil, the gap between wound parts in the wire of the coil is small. For this reason, when the coil portion of the tungsten wire having a small wire diameter is melt-processed, the thermal conduction between the coils is improved during the melt-processing. Thus, the dome has no non-molten coil portion left therein.
Moreover, the use of a thin tungsten wire as the coil allows fine adjustment of the volume of a molten dome by altering the number of times the coil is wound.
Furthermore, the use of a thin tungsten wire as the coil facilitates adjustment of energy for melt-processing, and eliminates unnecessary melt-processing as compared with the use of a thick tungsten wire.

Note that, when a thin tungsten wire at the distal-end portion is melt-processed, it is desirable that a small portion of the thick tungsten wire at the distal-end portion be molten, the portion serving as the boundary between the thin tungsten wire and the thick tungsten wire wound continuously from the thin tungsten wire. Thereby, the molten portion of the electrode and the coil portion firmly adhere to each other, making the electrode portion strong.
As has been described, by using the electrode of the present invention, the electrode state is made constant, enabling supplying of a discharge lamp with uniform brightness and less flickering.

### REFERENCE SINGS LIST

- 1:: electrode rod
- la:: electrode rod distal end
- 2:: coil having small wire diameter
- 3:: coil having somewhat large wire diameter
- 4:: electrode rod
- 5:: coil
- 5a:: single-wound coil
- 5b:: double-wound coil

## Claims

1. A tungsten electrode for an ultra-high pressure mercury lamp comprising:
an electrode rod;
a first coil wound around a distal-end portion of the electrode rod; and
a second coil wound from a winding end of the first coil,
wherein a wire diameter of a tungsten wire forming the first coil is smaller than a wire diameter of a tungsten wire forming the second coil.

2. The tungsten electrode of claim 1, wherein the distal-end portion of the electrode rod and the first coil are melt-processed to form an electrode distal end.

3. The tungsten electrode of claim 1, wherein the first coil is wound to form a plurality of layers.

4. An ultra-high pressure mercury lamp comprising a pair of the tungsten electrodes according to claim 1 disposed to face each other in a bulb.

5. A manufacturing method of a tungsten electrode for an ultra-high pressure mercury lamp, the method comprising the steps of:
winding a first coil around a distal-end portion of an electrode rod;
winding a second coil from a winding end of the first coil; and
melt-processing the distal-end portion of the electrode rod and the first coil to form an electrode distal end,
wherein a wire diameter of a tungsten wire forming the first coil is smaller than a wire diameter of a tungsten wire forming the second coil.

6. The manufacturing method of claim 5, wherein, in the step of winding the first coil around the electrode rod, the first coil is wound to form a plurality of layers.
